# FASCICULE DE BREVET EUROPEEN

(11) **EP 4 012 614 B1**
(45) Date de publication et mention de la délivrance du brevet: **05.07.2023**
(21) Numéro de dépôt: 21212277.4
(22) Date de dépôt: 03.12.2021
(51) Int. Cl.: G06K 19/07

(54) **DISPOSITIF ÉLECTRONIQUE**
ELEKTRONISCHE VORRICHTUNG
ELECTRONIC DEVICE

(30) Priorité: 14.12.2020 FR 2013185
(43) Date de publication de la demande: 15.06.2022
(73) Titulaire: STMicroelectronics (Rousset) SAS, 13790 Rousset (FR)
(72) Inventeur: DEGOT, Yannick, 83470 POURCIEUX (FR)
(74) Mandataire: Cabinet Beaumont

(56) Documents cités:
- EP-A1- 2 159 666
- EP-A1- 2 244 528
- US-A1- 2013 260 830
- US-A1- 2019 069 224

## Description

### Domaine technique

La présente description concerne de façon générale les dispositifs électroniques. La présente description concerne plus particulièrement les dispositifs de communication sans fil mettant en œuvre plusieurs modules d'identification d'abonné (« Subscriber Identity Module » - SIM, en anglais).

### Technique antérieure

On connaît des dispositifs de communication sans fil comportant plusieurs circuits intégrés mettant chacun en œuvre un module d'identification d'abonné. Certains de ces circuits peuvent faire partie d'une carte à microcircuit amovible, ou carte SIM, insérée par un utilisateur dans un emplacement dédié du dispositif. D'autres circuits peuvent faire partie d'une puce électronique inamovible, soudée en usine sur une carte de circuit imprimé du dispositif.

La présence de plusieurs de ces circuits, amovibles ou non, dans un même dispositif permet à l'utilisateur d'accéder à des fonctionnalités de communication sans fil étendues. Toutefois, l'intégration de tels circuits entraîne une augmentation de complexité et de coût des dispositifs.

Le document EP 2159666 décrit un dispositif monté en surface avec des cartes SIM multicouches.

Le document US 2019/069224 décrit un appareil de communication sans fil pour la gestion de l'accès à une pluralité de réseaux sans fil et son procédé de gestion.

Le document US 2013/260830 décrit un système de communication sans fil et un dispositif d'accès à un réseau sans fil.

Le document EP 2244528 décrit un dispositif radio mobile doté de plusieurs cartes SIM.

### Résumé de l'invention

Il existe un besoin d'améliorer les dispositifs électroniques de communication sans fil actuels mettant en oeuvre plusieurs modules d'identification d'abonné.

Un mode de réalisation pallie tout ou partie des inconvénients des dispositifs électroniques de communication sans fil connus mettant en oeuvre plusieurs modules d'identification d'abonné.

Un mode de réalisation prévoit un dispositif électronique comportant :
- un circuit modulateur-démodulateur ;
- un premier circuit intégré mettant en oeuvre un premier module d'identification d'abonné ; et
- au moins un deuxième circuit intégré destiné à mettre en oeuvre un deuxième module d'identification d'abonné,
dans lequel une borne d'émission-réception de données du premier circuit et une borne d'émission-réception de données du deuxième circuit sont connectées à une même borne d'émission-réception de données du circuit modulateur-démodulateur.

Selon ce mode de réalisation, une borne de réinitialisation du deuxième circuit est connectée à une première borne du premier circuit.

Selon ce mode de réalisation, la première borne du premier circuit est adaptée à appliquer, sur la borne de réinitialisation du deuxième circuit, un signal de désactivation du deuxième circuit.

Selon un mode de réalisation, une deuxième borne du premier circuit, associée à la première borne, est connectée à une troisième borne du circuit modulateur-démodulateur.

Selon un mode de réalisation, la troisième borne est adaptée à appliquer le signal de désactivation du deuxième circuit sur la deuxième borne.

Selon un mode de réalisation, une borne de séquencement du premier circuit et une borne de séquencement du deuxième circuit sont connectées à une même borne de séquencement du circuit modulateur-démodulateur.

Selon un mode de réalisation, une borne d'alimentation du premier circuit et une borne d'alimentation du deuxième circuit sont connectées à une même borne d'alimentation du circuit modulateur-démodulateur.

Selon un mode de réalisation, une borne de réinitialisation du premier circuit est connectée à une borne de réinitialisation du circuit modulateur-démodulateur.

Selon un mode de réalisation, la borne de réinitialisation du circuit modulateur-démodulateur est adaptée à appliquer, sur la borne de réinitialisation du premier circuit, un signal de désactivation du premier circuit.

Selon un mode de réalisation, les bornes d'émission-réception de données du circuit modulateur-démodulateur et des premier et deuxième circuits font chacune partie d'une interface de communication normalisée ISO 7816.

Selon un mode de réalisation, le premier circuit est une carte de circuit intégré universelle embarquée.

Selon un mode de réalisation, chaque deuxième circuit est choisi parmi :
- un emplacement destiné à recevoir une carte de circuit intégré universelle ;
- une carte de circuit intégré universelle embarquée, eUICC ; et
- une carte de circuit intégré universelle intégrée, iUICC.

Un mode de réalisation prévoit un véhicule automobile comportant un dispositif tel que décrit.

Un mode de réalisation prévoit un procédé de commande d'un dispositif tel que décrit, comprenant l'étape de traiter un signal de données par le premier circuit ou par le deuxième circuit en fonction d'un état du signal de désactivation du deuxième circuit.

Selon un mode de réalisation, le premier circuit est désactivé lorsque le deuxième circuit est activé.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1 représente, de façon schématique et sous forme de blocs, un exemple de système de communication sans fil du type auquel s'appliquent, à titre d'exemple, les modes de réalisation décrits ;
la figure 2 représente, de façon schématique et sous forme de blocs, un exemple de dispositif électronique de communication sans fil ;
la figure 3 représente, de façon schématique et sous forme de blocs, un autre exemple de dispositif électronique de communication sans fil ;
la figure 4 représente, de façon schématique et sous forme de blocs, encore un autre exemple de dispositif électronique de communication sans fil ;
la figure 5 représente, de façon schématique et sous forme de blocs, encore un autre exemple de dispositif électronique de communication sans fil ;
la figure 6 représente, de façon schématique et sous forme de blocs, un mode de réalisation d'un dispositif électronique de communication sans fil ;
la figure 7 représente, de façon schématique et sous forme de blocs, un autre mode de réalisation d'un dispositif électronique de communication sans fil ; et
la figure 8 représente un exemple de véhicule automobile comportant un dispositif électronique de communication sans fil.

### Description des modes de réalisation

De mêmes éléments ont été désignés par de mêmes références dans les différentes figures. En particulier, les éléments structurels et/ou fonctionnels communs aux différents modes de réalisation peuvent présenter les mêmes références et peuvent disposer de propriétés structurelles, dimensionnelles et matérielles identiques.

Par souci de clarté, seuls les étapes et éléments utiles à la compréhension des modes de réalisation décrits ont été représentés et sont détaillés. En particulier, la génération des signaux de communication sans fil et leur interprétation n'ont pas été détaillées, les modes de réalisation décrits étant compatibles avec les techniques usuelles de génération et d'interprétation de ces signaux.

Sauf précision contraire, lorsque l'on fait référence à deux éléments connectés entre eux, cela signifie directement connectés sans éléments intermédiaires autres que des conducteurs, et lorsque l'on fait référence à deux éléments reliés (en anglais "coupled") entre eux, cela signifie que ces deux éléments peuvent être connectés ou être reliés par l'intermédiaire d'un ou plusieurs autres éléments.

Dans la description qui suit, lorsque l'on fait référence à des qualificatifs de position absolue, tels que les termes "avant", "arrière", "haut", "bas", "gauche", "droite", etc., ou relative, tels que les termes "dessus", "dessous", "supérieur", "inférieur", etc., ou à des qualificatifs d'orientation, tels que les termes "horizontal", "vertical", etc., il est fait référence, sauf précision contraire, à l'orientation des figures.

Sauf précision contraire, les expressions "environ", "approximativement", "sensiblement", et "de l'ordre de" signifient à 10 % près, de préférence à 5 % près.

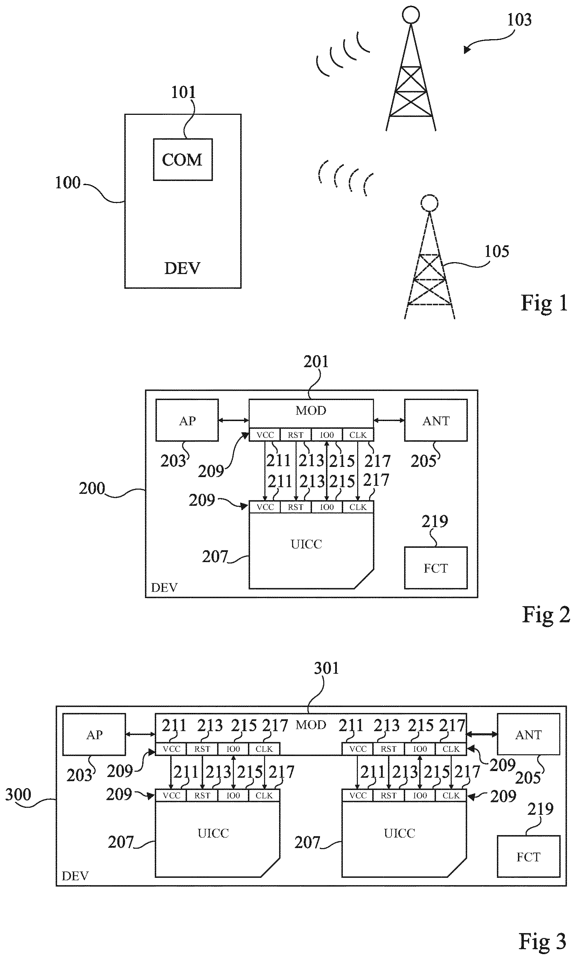

La figure 1 représente, de façon schématique et sous forme de blocs, un exemple de système de communication sans fil du type auquel s'appliquent, à titre d'exemple, les modes de réalisation décrits.

Dans l'exemple représenté, le système comporte un dispositif électronique 100 (DEV) de communication sans fil. Le dispositif 100 est par exemple un dispositif de communication radiofréquence. Le dispositif 100 comporte, dans cet exemple, un circuit de communication sans fil 101 (COM). Le circuit 101 permet par exemple au dispositif 100 de recevoir et de transmettre des données sur un premier réseau de communication, symbolisé en figure 1 par une antenne 103. À titre d'exemple, le dispositif 100 fait partie d'un véhicule automobile, d'un téléphone mobile, d'une tablette tactile, d'un ordinateur personnel, d'un objet connecté, etc.

Comme cela est illustré en figure 1, le circuit de communication 101 peut en outre permettre au dispositif 100 de recevoir et de transmettre des données sur un deuxième réseau de communication, symbolisé en figure 1 par une autre antenne 105. À titre d'exemple, les antennes des premier et deuxième réseaux de communication 103 et 105 font chacune partie d'une infrastructure de télécommunication différente. Ces infrastructures sont par exemple exploitées par des opérateurs différents.

De manière générale, chaque réseau de communication 103, 105 permet par exemple au dispositif 100 de communiquer avec d'autres dispositifs, non représentés en figure 1. Ces autres dispositifs sont par exemple analogues au dispositif 100.

Le dispositif 100 échange par exemple des données avec l'un et l'autre des réseaux 103 et 105 de façon alternative. Cela permet par exemple au dispositif 100 d'émettre et de recevoir des données, messages, appels téléphoniques, etc. en utilisant soit le réseau 103, soit le réseau 105. À titre d'exemple, cela permet au dispositif 100 de communiquer en utilisant l'un des réseaux 103, 105 en cas d'indisponibilité de l'autre réseau 105, 103.

La figure 2 représente, de façon schématique et sous forme de blocs, un exemple de dispositif électronique de communication sans fil 200 (DEV) du type du dispositif 100 de la figure 1. La figure 2 illustre plus précisément le cas d'un dispositif comportant un seul circuit adapté à mettre en oeuvre un module d'identification d'abonné (« Subscriber Identity Module » - SIM, en anglais).

Dans l'exemple représenté, le dispositif 200 comporte un circuit modulateur-démodulateur 201 (MOD), ou modem. Le modem 201 est par exemple relié à un microprocesseur 203 (AP) du dispositif 200. Le microprocesseur 203 est par exemple un processeur d'application principal du dispositif 200. À titre d'exemple, le microprocesseur 203 est soudé sur une carte de circuit imprimé (non représentée), par exemple une carte mère, du dispositif 200. Le modem 201 est par exemple également soudé sur la carte mère du dispositif 200.

Dans l'exemple représenté, le modem 201 est en outre relié à une antenne 205 (ANT) du dispositif 200. L'antenne 205 est par exemple une antenne radiofréquence, capable d'émettre et de recevoir des signaux de communication sur une ou plusieurs bandes de fréquences. Bien que cela n'ait pas été représenté en figure 2, l'antenne 205 est par exemple reliée au modem 201 par un circuit d'adaptation d'impédance. En outre, le dispositif 200 peut comporter au moins un filtre électromagnétique (non représenté), configuré pour atténuer ou éliminer des perturbations électromagnétiques susceptibles d'affecter des signaux reçus ou transmis par l'antenne 205.

Dans l'exemple représenté, le modem 201 est connecté à un circuit intégré 207 (UICC). Le modem 201 et le circuit intégré 207 comportent par exemple chacun une interface de communication 209. Les interfaces de communication 209 du modem 201 et du circuit 207 sont par exemple connectées l'une à l'autre, par exemple par des pistes conductrices de la carte de circuit imprimé du dispositif 200. À titre d'exemple, les interfaces de communication 209 du modem 201 et du circuit intégré 207 sont des interfaces de communication normalisées ISO 7816.

Dans cet exemple, chaque interface de communication 209 comprend :
- une borne 211 (VCC) d'alimentation ;
- une borne 213 (RST) de réinitialisation ;
- une borne 215 (IO0) d'émission-réception de données ; et
- une borne 217 (CLK) de séquencement.

Dans l'exemple représenté, le modem 201 et le circuit 207 s'échangent des signaux et données par l'intermédiaire de leurs interfaces de communication 209 respectives. Pour une communication entre le modem 201 et le circuit intégré 207, l'interface 209 du modem 201 est par exemple configurée comme interface maître tandis que l'interface 209 du circuit 207 est configurée comme interface esclave.

Plus précisément, dans l'exemple représenté :
- la borne 211 de l'interface 209 du modem 201 est configurée pour appliquer un signal d'alimentation VCC sur la borne 211 de l'interface 209 du circuit 207 ;
- la borne 213 de l'interface 209 du modem 201 est configurée pour appliquer un signal de réinitialisation RST sur la borne 213 de l'interface 209 du circuit 207 ;
- la borne 215 de l'interface 209 du modem 201 est configurée pour transmettre des signaux de données IO0 à la borne 215 de l'interface 209 du circuit 207 et pour recevoir des signaux de données IO0 transmis par la borne 215 de l'interface 209 du circuit 207 ; et
- la borne 217 de l'interface 209 du modem 201 est configurée pour appliquer un signal de séquencement ou d'horloge CLK sur la borne 217 de l'interface 209 du circuit 207.

Le circuit intégré 207 du dispositif 200 est par exemple un emplacement ou logement destiné à recevoir une carte à microcircuit amovible. Cette carte à microcircuit est par exemple une carte de circuit intégré universelle (« Universal Integrated Circuit Card » - UICC, en anglais), également appelée carte à module d'identification d'abonné (« Subscriber Identity Module » - SIM, en anglais) ou, plus simplement, carte SIM. Dans ce cas, le circuit intégré 207 comporte par exemple des éléments de reprise de contact (non représentés) permettant de connecter des plots de la carte SIM aux bornes 211, 213, 215 et 217 de l'interface 209 du circuit 207.

La carte SIM est par exemple fournie indépendamment du dispositif 200. À titre d'exemple, la carte SIM est obtenue par un utilisateur du dispositif 200 auprès d'un opérateur de télécommunication, par exemple l'opérateur du réseau 103 de la figure 1. La carte SIM est alors par exemple insérée dans l'emplacement 207 par l'utilisateur, de sorte à permettre au dispositif 200 de communiquer en utilisant le réseau 103.

Afin de permettre au dispositif 200 de communiquer en utilisant un autre réseau, par exemple le réseau 105 de la figure 1, l'utilisateur est par exemple contraint d'acquérir une autre carte SIM. Cette autre carte SIM est par exemple fournie par l'opérateur de télécommunication exploitant le réseau 105. En substituant par exemple la carte SIM de l'opérateur du réseau 103 par celle de l'opérateur du réseau 105 dans l'emplacement 207, l'utilisateur permet alors au dispositif 200 de communiquer en utilisant le réseau 105.

En variante, le circuit intégré 207 est un circuit non amovible mettant en oeuvre un module d'identification d'abonné. Le circuit 207 est alors par exemple une carte de circuit intégré universelle embarquée (« embedded Universal Integrated Circuit Card » - eUICC, en anglais), également appelée module embarqué d'identification d'abonné (« embedded Subscriber Identity Module » - eSIM, en anglais) . Dans ce cas, le circuit intégré 207 fait par exemple partie d'une puce électronique solidaire d'une carte de circuit imprimé (non représentée) du dispositif 200. À titre d'exemple, la puce électronique comportant le circuit 207 est soudée sur la carte mère du dispositif 200. Le circuit intégré 207 peut alternativement être une carte de circuit intégré universelle intégrée (« integrated Universal Integrated Circuit Card » - iUICC, en anglais), également appelée module intégré d'identification d'abonné (« integrated Subscriber Identity Module » - iSIM, en anglais). Dans ce cas, le circuit intégré 207 fait par exemple partie du microprocesseur 203 du dispositif 200.

Dans la variante où le circuit intégré 207 est une carte de circuit intégré universelle embarquée ou intégrée, non amovible, le circuit 207 est présent dans le dispositif 200 après fabrication. Pour permettre au dispositif 200 de communiquer en utilisant par exemple le réseau 103 de la figure 1, un profil SIM est par exemple stocké dans une zone mémoire (non représentée) du circuit 207. Ce profil SIM est par exemple téléchargé par l'utilisateur du dispositif 200 depuis un serveur de données exploité par l'opérateur du réseau 103.

Afin de permettre au dispositif 200 de communiquer en utilisant un autre réseau, par exemple le réseau 105 de la figure 1, l'utilisateur est par exemple contraint de télécharger un autre profil SIM. Cet autre profil SIM est par exemple mis à disposition de l'utilisateur par l'opérateur de télécommunication exploitant le réseau 105. En stockant par exemple le profil SIM de l'opérateur du réseau 105 dans la mémoire du circuit 207, l'utilisateur permet alors au dispositif 200 de communiquer en utilisant le réseau 105. En fonction notamment d'une capacité mémoire du circuit 207, le profil SIM de l'opérateur du réseau 105 peut être stocké à la place ou en complément du profil SIM de l'opérateur du réseau 103.

Le dispositif 200 peut en outre comporter un ou plusieurs autres éléments. Ces éléments sont symbolisés, en figure 2, par un bloc fonctionnel 219 (FCT).

La figure 3 représente, de façon schématique et sous forme de blocs, un autre exemple de dispositif électronique de communication sans fil 300 (DEV) du type du dispositif 100 de la figure 1. La figure 3 illustre plus précisément le cas d'un dispositif comportant deux circuits adaptés à mettre en oeuvre chacun un module d'identification d'abonné.

Le dispositif 300 de la figure 3 comprend des éléments communs avec le dispositif 200 de la figure 2. Ces éléments communs ne seront pas détaillés à nouveau ci-après. Le dispositif 300 de la figure 3 diffère du dispositif 200 de la figure 2 principalement en ce que le dispositif 300 comporte, à la place du modem 201, un modem 301 (MOD) comprenant deux interfaces de communication 209.

Dans l'exemple représenté, le modem 301 du dispositif 300 est connecté à deux circuits intégrés 207 (UICC). L'une des interfaces de communication 209 du modem 301 est par exemple connectée à l'interface de communication 209 de l'un des circuits intégrés 207, tandis que l'autre interface de communication 209 du modem 301 est connectée à l'interface de communication 209 de l'autre circuit intégré 207.

Plus précisément, dans l'exemple représenté :
- les bornes 211, 213, 215 et 217 de l'une des interfaces 209 du modem 301 sont connectées respectivement aux bornes 211, 213, 215 et 217 de l'interface 209 de l'un des circuits 207 ; et
- les bornes 211, 213, 215 et 217 de l'autre interface 209 du modem 301 sont connectées respectivement aux bornes 211, 213, 215 et 217 de l'interface 209 de l'autre circuit 207.

Les interfaces de communication 209 du modem 301 sont par exemple connectées aux interfaces de communication 209 des circuits 207 par des pistes conductrices d'une carte de circuit imprimé du dispositif 300. À titre d'exemple, les interfaces de communication 209 du modem 301 sont des interfaces de communication normalisées ISO 7816.

Dans l'exemple représenté, le modem 301 et les circuits 207 s'échangent des signaux et données par l'intermédiaire de leurs interfaces de communication 209 respectives. Pour une communication entre le modem 301 et les circuits intégrés 207, les interfaces 209 du modem 301 sont par exemple configurées comme interfaces maîtres tandis que l'interface 209 de chaque circuit 207 est configurée comme interface esclave.

Plus précisément, dans l'exemple représenté :
- les bornes 211, 213 et 217 de chaque interface 209 du modem 301 sont configurées pour appliquer les signaux VCC, RST et CLK sur les bornes 211, 213 et 217 de l'interface 209 du circuit 207 auxquelles elles sont respectivement connectées ; et
- la borne 215 de chaque interface 209 du modem 301 est configurée pour transmettre les signaux de données IO0 à la borne 215 de l'interface 209 du circuit 207 à laquelle elle est connectée et pour recevoir les signaux de données IO0 transmis par la borne 215 de l'interface 209 du circuit 207 à laquelle elle est connectée.

En fonction par exemple de l'application visée, chaque circuit 207 peut, comme exposé précédemment en relation avec la figure 2, recevoir une carte SIM ou stocker un profil SIM. À titre d'exemple, l'un des circuits 207 du dispositif 300 reçoit une carte SIM, ou stocke un profil SIM, permettant d'accéder à un réseau différent d'un réseau pouvant être utilisé grâce à une carte SIM insérée, ou un profil SIM stocké, dans l'autre circuit 207. L'un des circuits 207 met par exemple en oeuvre un module d'identification d'abonné permettant au dispositif 300 de communiquer en utilisant le réseau 103 de la figure 1. L'autre circuit 207 met par exemple en oeuvre un module d'identification d'abonné permettant au dispositif 300 de communiquer en utilisant le réseau 105 de la figure 1.

Un inconvénient du dispositif 300 tient au fait que le modem 301 comporte deux interfaces de communication 209. Ces deux interfaces 209 entraînent une augmentation de taille, de complexité et de coût du modem 301, donc du dispositif 300.

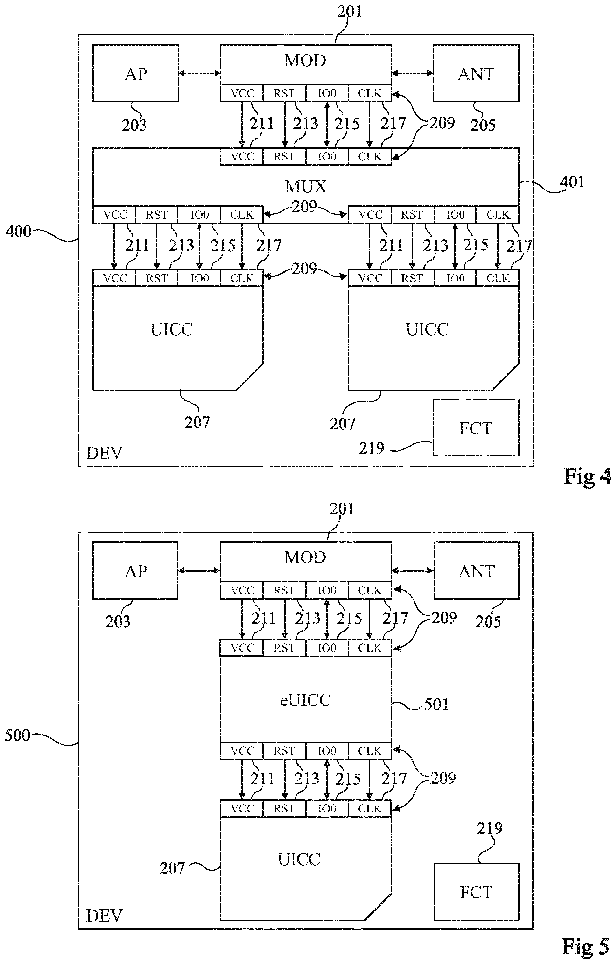

La figure 4 représente, de façon schématique et sous forme de blocs, encore un autre exemple de dispositif électronique de communication sans fil 400 (DEV) du type du dispositif 100 de la figure 1. La figure 4 illustre plus précisément le cas d'un dispositif comportant un modem relié, par un multiplexeur, à deux circuits adaptés à mettre en oeuvre chacun un module d'identification d'abonné.

Le dispositif 400 de la figure 4 comprend des éléments communs avec le dispositif 200 de la figure 2. Ces éléments communs ne seront pas détaillés à nouveau ci-après. Le dispositif 400 de la figure 4 diffère du dispositif 200 de la figure 2 principalement en ce que le dispositif 400 comporte un multiplexeur 401 (MUX) et deux circuits intégrés 207 (UICC).

Dans l'exemple représenté, le modem 201 (MOD) du dispositif 400 est connecté au multiplexeur 401. Le multiplexeur 401 comporte par exemple trois interfaces de communication 209. Comme illustré en figure 4, le multiplexeur 401 comporte par exemple une interface 209 connectée à l'interface 209 du modem 201 et deux autres interfaces 209 connectées chacune à l'interface 209 de l'un des circuits intégrés 207.

Plus précisément, dans l'exemple représenté :
- les bornes 211, 213, 215 et 217 de l'une des interfaces 209 du multiplexeur 401 sont connectées respectivement aux bornes 211, 213, 215 et 217 de l'interface 209 du modem 201 ; et
- les bornes 211, 213, 215 et 217 de chacune des autres interfaces 209 du multiplexeur 401 sont connectées respectivement aux bornes 211, 213, 215 et 217 de l'interface 209 de l'un des circuits 207.

Les interfaces de communication 209 du multiplexeur 401 sont par exemple connectées aux interfaces de communication 209 du modem 201 et des circuits 207 par des pistes conductrices d'une carte de circuit imprimé du dispositif 400. À titre d'exemple, les interfaces de communication du multiplexeur 401 sont des interfaces de communication normalisées ISO 7816.

Dans l'exemple représenté, le modem 201 et les circuits 207 s'échangent des signaux et données par l'intermédiaire du multiplexeur 400. Pour une communication entre le modem 201 et les circuits intégrés 207, l'interface 209 du modem 301 et les interfaces 209 du multiplexeur 401 connectées aux circuits 207 sont par exemple configurées comme interface maîtres tandis que l'interface 209 du multiplexeur connectée au modem 201 et l'interface 209 de chaque circuit 207 sont configurées comme interfaces esclaves.

Plus précisément, dans l'exemple représenté :
- les bornes 211, 213 et 217 de l'interface 209 du modem 201 sont configurées pour appliquer les signaux VCC, RST et CLK sur les bornes 211, 213 et 217 de l'interface 209 du multiplexeur 401 connectée au modem 201 ;
- la borne 215 de l'interface 209 du modem 201 est configurée pour transmettre les signaux de données IO0 à la borne 215 de l'interface 209 du multiplexeur 401 connectée au modem 201 et pour recevoir les signaux de données IO0 transmis par la borne 215 de l'interface 209 du multiplexeur 401 connectée au modem 201 ;
- les bornes 211, 213 et 217 de chaque interface 209 du multiplexeur 401 connectée à l'un des circuits 207 sont configurées pour appliquer les signaux VCC, RST et CLK sur les bornes 211, 213 et 217 de l'interface 209 du circuit 207 associé ; et
- la borne 215 de chaque interface 209 du multiplexeur 401 connectée à l'un des circuits 207 est configurée pour transmettre les signaux de données IO0 à la borne 215 de l'interface 209 du circuit 207 associé et pour recevoir les signaux de données IO0 transmis par la borne 215 de l'interface 209 du circuit 207 associé.

À titre d'exemple, le multiplexeur 401 est adapté à aiguiller les signaux VCC, RST, IO0 et CLK vers l'un ou l'autre des circuits 207 du dispositif 400, par exemple en fonction d'un signal de commande (non représenté). Ce signal de commande est par exemple transmis au multiplexeur 401 par le microprocesseur 203 (AP). Le multiplexeur 401 est par exemple configuré pour permettre au modem 201 d'échanger les signaux de données IO0 avec l'un ou l'autre des circuits 207, par exemple de façon alternative. Dans ce cas, le multiplexeur 401 transmet par exemple les signaux IO0 reçus du modem 201 à l'un ou l'autre des circuits 207 en fonction du signal de commande.

En variante, le multiplexeur 401 est par exemple configuré pour permettre au modem 201 d'échanger les signaux de données IO0 avec les deux circuits 207, par exemple de façon simultanée. Dans ce cas, le multiplexeur 401 est par exemple configuré pour démultiplexer les signaux IO0 reçus du modem 201, puis pour transmettre ces signaux démultiplexés à chaque circuit 207. Le multiplexeur 401 est par exemple configuré en outre pour multiplexer les signaux IO0 reçus des circuits 207, puis pour transmettre ces signaux multiplexés au modem 201.

Un inconvénient du dispositif 400 tient au fait que les circuits 207 sont reliés au modem 201 par l'intermédiaire du multiplexeur 401. La présence du multiplexeur 401 entraîne une augmentation de complexité, de taille et de coût du dispositif 400.

La figure 5 représente, de façon schématique et sous forme de blocs, encore un autre exemple de dispositif électronique de communication sans fil 500 (DEV) du type du dispositif 100 de la figure 1. La figure 5 illustre plus précisément le cas d'un dispositif comportant deux circuits adaptés à mettre en oeuvre chacun un module d'identification d'abonné, l'un des circuits étant relié à un modem par l'autre circuit.

Le dispositif 500 de la figure 5 comprend des éléments communs avec le dispositif 200 de la figure 2. Ces éléments communs ne seront pas détaillés à nouveau ci-après. Le dispositif 500 de la figure 5 diffère du dispositif 200 de la figure 2 principalement en ce que le circuit intégré 207 (UICC) du dispositif 500 est relié au modem 201 (MOD) par l'intermédiaire d'un autre circuit intégré 501 (eUICC).

Dans l'exemple représenté, le modem 201 et le circuit 207 du dispositif 500 sont connectés chacun au circuit 501. Le circuit 501 comporte par exemple deux interfaces de communication 209 analogues à celles du modem 201 et du circuit 207. L'une des interfaces de communication 209 du circuit 501 est par exemple connectée à l'interface de communication 209 du modem 201. L'autre interface de communication 209 du circuit 501 est par exemple connectée à l'interface de communication 209 du circuit intégré 207.

Plus précisément, dans l'exemple représenté :
- les bornes 211, 213, 215 et 217 de l'une des interfaces 209 du circuit 501 sont connectées respectivement aux bornes 211, 213, 215 et 217 de l'interface 209 du modem 201 ; et
- les bornes 211, 213, 215 et 217 de l'autre interface 209 du circuit 501 sont connectées respectivement aux bornes 211, 213, 215 et 217 de l'interface 209 du circuit 207.

Les interfaces de communication 209 du circuit 501 sont par exemple connectées aux interfaces de communication 209 du modem 201 et du circuit 207 par des pistes conductrices d'une carte de circuit imprimé du dispositif 500. À titre d'exemple, les interfaces de communication 209 du circuit intégré 501 sont des interfaces de communication normalisées ISO 7816.

Dans l'exemple représenté, le modem 201 et les circuits 501, 207 s'échangent des signaux et données par l'intermédiaire de leurs interfaces de communication 209 respectives. Pour une communication entre le modem 201 et les circuits intégrés 501, 207, l'interface 209 du modem 201 et l'interface 209 du circuit 501 connectée au circuit 207 sont par exemple configurées comme interfaces maîtres. L'interface 209 du circuit 501 connectée au modem 201 et l'interface 209 du circuit 207 sont par exemple configurées comme interfaces esclaves.

Plus précisément, dans l'exemple représenté :
- les bornes 211, 213 et 217 de l'interface 209 du modem 201 sont configurées pour appliquer les signaux VCC, RST et CLK sur les bornes 211, 213 et 217 de l'interface 209 du circuit 501 auxquelles elles sont respectivement connectées ; et
- la borne 215 de l'interface 209 du modem 201 est configurée pour transmettre les signaux de données IO0 à la borne 215 de l'interface 209 du circuit 501 à laquelle elle est connectée et pour recevoir les signaux de données IO0 transmis par la borne 215 de l'interface 209 du circuit 501 à laquelle elle est connectée.

En outre, dans l'exemple représenté :
- les bornes 211, 213 et 217 de l'interface 209 du circuit 501 connectée au circuit 207 sont configurées pour appliquer les signaux VCC, RST et CLK sur les bornes 211, 213 et 217 de l'interface 209 du circuit 207 auxquelles elles sont respectivement connectées ; et
- la borne 215 de l'interface 209 du circuit 501 connectée au circuit 207 est configurée pour transmettre les signaux de données IO0 à la borne 215 de l'interface 209 du circuit 207 et pour recevoir les signaux de données IO0 transmis par la borne 215 de l'interface 209 du circuit 207.

En variante, le signal VCC est transmis au circuit 207 directement par le modem 201. Le circuit 207 ne reçoit alors pas le signal VCC depuis le circuit 501. Dans cette variante, la borne 211 de l'interface 209 du circuit 207 est connectée à la borne 211 de l'interface 209 du modem 201. La borne 211 de l'interface 209 du circuit 501 connectée au modem 201 peut être la même borne que la borne 211 de l'interface 209 du circuit 501 connectée au circuit 207.

En fonction par exemple de l'application visée, chaque circuit 501, 207 peut, comme exposé précédemment en relation avec la figure 2, recevoir une carte SIM ou stocker un profil SIM. Le circuit 501 est par exemple une carte de circuit intégré universelle embarquée, eUICC. Le circuit 207 est par exemple un emplacement destiné à recevoir une carte SIM. À titre d'exemple, le circuit 501 stocke un profil SIM permettant d'accéder à un réseau différent du réseau pouvant être utilisé grâce à la carte SIM insérée dans le circuit 207. Le circuit 501 met par exemple en oeuvre un module d'identification d'abonné permettant au dispositif 500 de communiquer en utilisant le réseau 103 de la figure 1. Le circuit 207 est par exemple destiné à mettre en oeuvre un module d'identification d'abonné permettant au dispositif 500 de communiquer en utilisant le réseau 105 de la figure 1.

À titre d'exemple, le circuit 501 est adapté à traiter les signaux VCC, RST, IO0 et CLK reçus du modem 201 ou à transmettre ces signaux vers le circuit 207, par exemple en fonction d'un signal de commande non représenté. Ce signal de commande est par exemple transmis au circuit 501 par le microprocesseur 203 (AP). Le circuit 501 est par exemple configuré pour permettre au modem 201 d'échanger les signaux de données IO0 avec l'un ou l'autre des circuits 501, 207, par exemple de façon alternative. Le circuit 501 agit par exemple comme une passerelle (« bridge », en anglais) de communication entre le modem 201 et le circuit 207 du dispositif 500.

Un inconvénient du dispositif 500 tient au fait que le circuit 501 comporte une interface 209 configurée en tant que maître pour la communication avec le circuit 207. La présence de cette interface entraîne une augmentation de complexité, de taille et de coût du circuit 501, donc du dispositif 500. En outre, une telle interface requiert une programmation logicielle difficile à réaliser.

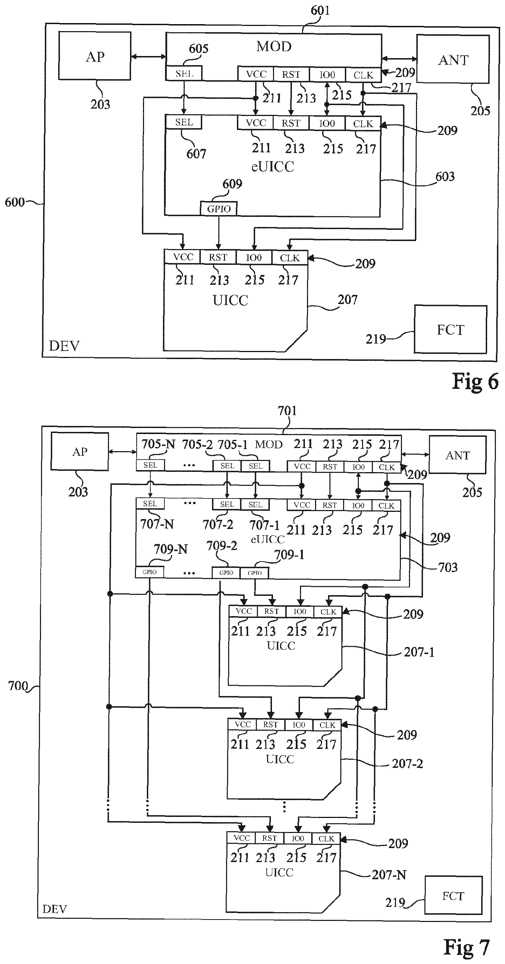

La figure 6 représente, de façon schématique et sous forme de blocs, un mode de réalisation d'un dispositif électronique de communication sans fil 600 (DEV) du type du dispositif 100 de la figure 1. La figure 6 illustre plus précisément le cas d'un dispositif comportant deux circuits adaptés à mettre en oeuvre chacun un module d'identification d'abonné, ces circuits étant reliés à une même interface de communication d'un modem.

Le dispositif 600 de la figure 6 comprend des éléments communs avec le dispositif 200 de la figure 2. Ces éléments communs ne seront pas détaillés à nouveau ci-après. Le dispositif 600 de la figure 6 diffère du dispositif 200 de la figure 2 principalement en ce que le dispositif 600 comporte, à la place du modem 201, un modem 601 (MOD) connecté au circuit 207 (UICC) et à un autre circuit intégré 603 (eUICC).

Dans l'exemple représenté, les circuits intégrés 603 et 207 du dispositif 600 sont connectés chacun au modem 601. Le circuit 603 comporte par exemple une seule interface de communication 209 analogue à celle du circuit 207. En outre, le modem 601 comporte par exemple une seule interface de communication 209 analogue à celle du circuit 207. L'interface de communication 209 du circuit 603 est par exemple connectée à l'interface de communication 209 du modem 601. L'interface de communication 209 du circuit 207 est par exemple connectée, à l'exception de sa borne 213, à l'interface de communication 209 du modem 601.

Plus précisément, dans l'exemple représenté :
- les bornes 211, 213, 215 et 217 de l'interface 209 du modem 601 sont connectées respectivement aux bornes 211, 213, 215 et 217 de l'interface 209 du circuit 603 ; et
- les bornes 211, 215 et 217 de l'interface 209 du circuit 207 sont connectées respectivement aux bornes 211, 215 et 217 de l'interface 209 du modem 601.

L'interface de communication 209 du modem 601 est par exemple connectée aux interfaces de communication 209 des circuits 603 et 207 par des pistes conductrices d'une carte de circuit imprimé du dispositif 600. À titre d'exemple, les interfaces de communication 209 du modem 601 et du circuit intégré 603 sont des interfaces de communication normalisées ISO 7816.

Dans l'exemple représenté, le modem 601 et les circuits 603, 207 s'échangent des signaux et données par l'intermédiaire de leurs interfaces de communication 209 respectives. Pour une communication entre le modem 601 et les circuits intégrés 603, 207, l'interface 209 du modem 601 est par exemple configurée comme interface maître. Les interfaces 209 des circuits 603, 207 sont par exemple configurées comme interfaces esclaves.

Plus précisément, dans l'exemple représenté :
- les bornes 211 et 217 de l'interface 209 du modem 601 sont configurées pour appliquer les signaux VCC et CLK sur les bornes 211 et 217 de l'interface 209 du circuit 603, 207 auxquelles elles sont respectivement connectées ;
- la borne 213 de l'interface 209 du modem 601 est configurée pour appliquer le signal RST sur la borne 213 de l'interface 209 du circuit 603 ; et
- la borne 215 de l'interface 209 du modem 601 est configurée pour transmettre les signaux de données IO0 à la borne 215 de l'interface 209 du circuit 603, 207 à laquelle elle est connectée et pour recevoir les signaux de données IO0 transmis par la borne 215 de l'interface 209 du circuit 603, 207 à laquelle elle est connectée.

Dans l'exemple représenté, le modem 601 comporte une borne 605 (SEL) . La borne 605 du modem 601 est par exemple connectée à une borne 607 (SEL) du circuit intégré 603. La borne 605 est par exemple configurée pour appliquer, sur la borne 607 du circuit 603, un signal SEL de désactivation, réinitialisation ou désélection du circuit 207.

Dans l'exemple représenté, le circuit 603 comporte une autre borne 609 (GPIO). La borne 609 du circuit 603 est par exemple connectée à la borne 213 de l'interface de communication 209 du circuit 207. La borne 609 est par exemple configurée pour appliquer, sur la borne 213 de l'interface 209 du circuit 207, le signal de désactivation SEL du circuit 207.

À titre d'exemple, les bornes 605, 607 et 609 sont des bornes d'entrée-sortie universelles (« General Purpose Input-Output » - GPIO, en anglais).

Le dispositif 600 est par exemple configuré pour traiter les signaux de données IO0 transmis par la borne 215 de l'interface 209 du modem 601 en fonction de l'état du signal de désactivation SEL du circuit 207. Le signal SEL est par exemple un signal binaire pouvant se trouver dans un état haut ou dans un état bas. À titre d'exemple, lorsque le signal SEL est à l'état haut, le circuit 207 est activé ou sélectionné et échange les signaux de données IO0 avec le modem 601. En revanche, lorsque le signal SEL est à l'état bas, le circuit 207 est par exemple désactivé ou désélectionné et ne peut pas échanger les signaux de données IO0 avec le modem 601.

Lorsque le signal SEL est à l'état bas, le circuit 603 est sélectionné ou activé pour communiquer avec le modem 601. Plus précisément, dans ce cas, l'interface 209 du circuit 603 est utilisée pour communiquer avec l'interface 209 du modem 601. La borne 609 du circuit 603 est alors configurée pour appliquer le signal RST à l'état bas sur la borne 213 du circuit 207. Cela désélectionne ou désactive le circuit 207 pour la communication avec le modem 601.

En revanche, lorsque le signal SEL est à l'état haut, le circuit 603 est désélectionné ou désactivé pour communiquer avec le modem 601. Le signal RST appliqué par le modem 601 sur la borne 213 de l'interface 209 du circuit 603 est alors recopié par le circuit 603 sur sa borne 609. Cela permet ainsi au modem 601 d'appliquer, via le circuit 603, le signal RST sur la borne 213 du circuit 207. Lorsque le signal RST est maintenu à l'état haut, le circuit 207 est sélectionné ou activé pour communiquer directement avec le modem 601 par son interface 209, à l'exception du signal RST transmis par l'intermédiaire du circuit 603.

En fonction par exemple de l'application visée, chaque circuit 603, 207 du dispositif 600 peut, comme exposé précédemment en relation avec la figure 2, recevoir une carte SIM ou stocker un profil SIM. Le circuit 603 est par exemple une carte de circuit intégré universelle embarquée, eUICC. En variante, le circuit 603 est une carte de circuit intégré universelle intégrée, iUICC. Le circuit 207 est par exemple un emplacement destiné à recevoir une carte SIM. À titre d'exemple, le circuit 603 stocke un profil SIM permettant d'accéder à un réseau différent du réseau pouvant être utilisé grâce à la carte SIM insérée dans le circuit 207. Le circuit 603 met par exemple en oeuvre un module d'identification d'abonné permettant au dispositif 600 de communiquer en utilisant le réseau 103 de la figure 1. Le circuit 207 est par exemple destiné à mettre en oeuvre un module d'identification d'abonné permettant au dispositif 600 de communiquer en utilisant le réseau 105 de la figure 1.

Le dispositif 600 de la figure 6 diffère du dispositif 500 de la figure 5 notamment en ce que le circuit 603 du dispositif 600 ne comporte pas d'interface de communication 209 configurée en tant que maître, contrairement au circuit 501. En particulier, le circuit 603 n'agit pas comme une passerelle de communication entre le modem 601 et le circuit 207 du dispositif 600.

Un avantage du mode de réalisation exposé ci-dessus en relation avec la figure 6 tient au fait que le dispositif 600 est moins complexe, moins coûteux et moins encombrant, par rapport notamment aux dispositifs 400 et 500.

La figure 7 représente, de façon schématique et sous forme de blocs, un autre mode de réalisation d'un dispositif électronique de communication sans fil 700 (DEV) du type du dispositif 100 de la figure 1. La figure 7 illustre plus précisément le cas d'un dispositif comportant plusieurs circuits adaptés à mettre en oeuvre chacun un module d'identification d'abonné, ces circuits étant reliés à une même interface de communication d'un modem. La figure 7 illustre par exemple une généralisation du mode de réalisation de la figure 6 au cas d'un dispositif comportant une pluralité de circuits 207.

Le dispositif 700 de la figure 7 comprend des éléments communs avec le dispositif 600 de la figure 6. Ces éléments communs ne seront pas détaillés à nouveau ci-après. Le dispositif 700 de la figure 7 diffère du dispositif 600 de la figure 6 principalement en ce que le dispositif 700 comporte, à la place du modem 601, un modem 701 (MOD) connecté à un circuit intégré 703 (eUICC) et à N circuits intégrés 207-1, 207-2, ... 207-N (UICC).

Dans l'exemple représenté, les circuits intégrés 703 et 207 (207-1, 207-2, ... 207-N) du dispositif 700 sont connectés chacun au modem 701. Le circuit 703 comporte par exemple une seule interface de communication 209, par exemple analogue à l'interface 209 du circuit 603 (figure 6). En outre, le modem 701 comporte par exemple une seule interface de communication 209, par exemple analogue à celle du modem 601 (figure 6). L'interface de communication 209 du circuit 703 est par exemple connectée à l'interface de communication 209 du modem 701. L'interface de communication 209 de chaque circuit 207 est par exemple connectée, à l'exception de sa borne 213, à l'interface de communication 209 du modem 701.

Plus précisément, dans l'exemple représenté :
- les bornes 211, 213, 215 et 217 de l'interface 209 du modem 701 sont connectées respectivement aux bornes 211, 213, 215 et 217 de l'interface 209 du circuit 703 ; et
- les bornes 211, 215 et 217 de l'interface 209 de chaque circuit 207 sont connectées respectivement aux bornes 211, 215 et 217 de l'interface 209 du modem 701.

L'interface de communication 209 du modem 701 est par exemple connectée aux interfaces de communication 209 des circuits 703 et 207 par des pistes conductrices d'une carte de circuit imprimé du dispositif 700. À titre d'exemple, les interfaces de communication 209 du modem 701 et des circuits intégrés 703, 207-1, 207-2, ... 207-N sont des interfaces de communication normalisées ISO 7816.

Dans l'exemple représenté, le modem 701 et les circuits 703, 207-1, 207-2, ... 207-N s'échangent des signaux et données par l'intermédiaire de leurs interfaces de communication 209 respectives. Pour une communication entre le modem 701 et les circuits intégrés 703, 207-1, 207-2, ... 207-N, l'interface 209 du modem 701 est par exemple configurée comme interface maître. Les interfaces 209 des circuits 703, 207-1, 207-2, ... 207-N sont par exemple configurées comme interfaces esclaves.

Plus précisément, dans l'exemple représenté :
- les bornes 211 et 217 de l'interface 209 du modem 701 sont configurées pour appliquer les signaux VCC et CLK sur les bornes 211 et 217 de l'interface 209 du circuit 703, 207-1, 207-2, ... 207-N auxquelles elles sont respectivement connectées ;
- la borne 213 de l'interface 209 du modem 701 est configurée pour appliquer le signal RST sur la borne 213 de l'interface 209 du circuit 703 ; et
- la borne 215 de l'interface 209 du modem 701 est configurée pour transmettre les signaux de données IO0 à la borne 215 de l'interface 209 du circuit 703, 207-1, 207-2, ... 207-N à laquelle elle est connectée et pour recevoir les signaux de données IO0 transmis par la borne 215 de l'interface 209 du circuit 703, 207-1, 207-2, ... 207-N à laquelle elle est connectée.

Dans l'exemple représenté, le modem 701 comporte N bornes 705-1, 705-2, ... 705-N (SEL). Chaque borne 705 du modem 701 est par exemple connectée à une borne 707-1, 707-2, ... 707-N (SEL) du circuit intégré 703. Chaque borne 705-1, 705-2, ... 705-N est par exemple configurée pour appliquer, sur la borne 707-1, 707-2, ... 707-N associée du circuit 703, un signal SEL-1, SEL-2, ... SEL-N de désactivation ou désélection du circuit 207-1, 207-2, ... 207-N.

Dans l'exemple représenté, le circuit 703 comporte N autres bornes 709-1, 709-2, ... 709-N (GPIO). Les bornes 709-1, 709-2, ... 709-N sont par exemple associées aux bornes 707-1, 707-2, ... 707-N. Chaque borne 709-1, 709-2, ... 709-N du circuit 703 est par exemple connectée à la borne 213 de l'interface de communication 209 du circuit 207-1, 207-2, ... 207-N. Chaque borne 709-1, 709-2, ... 709-N est par exemple configurée pour appliquer, sur la borne 213 du circuit 207-1, 207-2, ... 207-N associé, le signal SEL-1, SEL-2, ... SEL-N du circuit 207-1, 207-2, ... 207-N.

À titre d'exemple, les bornes 705 (705-1, 705-2, ... 705-N), 707 (707-1, 707-2, ... 707-N) et 709 (709-1, 709-2, ... 709-N) sont des bornes d'entrée-sortie universelles (« General Purpose Input-Output » - GPIO, en anglais).

Le fonctionnement du dispositif 700 est analogue au fonctionnement du dispositif 600 précédemment décrit. Le dispositif 700 est par exemple configuré pour traiter les signaux de données IO0 transmis par la borne 215 de l'interface 209 du modem 701 en fonction de l'état des signaux SEL-1, SEL-2, ... SEL-N. Chaque signal SEL-1, SEL-2, ... SEL-N est par exemple un signal binaire pouvant se trouver dans un état haut ou dans un état bas.

Lorsque les signaux SEL-1, SEL-2, ... SEL-N sont tous à l'état bas, le circuit 703 est sélectionné ou activé pour communiquer avec le modem 701. Plus précisément, dans ce cas, l'interface 209 du circuit 703 est utilisée pour communiquer avec l'interface 209 du modem 701. Toutes les bornes 709-1, 709-2, ... 709-N du circuit 703 sont alors configurées pour appliquer le signal RST à l'état bas sur la borne 213 de l'interface 209 de chaque circuit 207-1, 207-2, ... 207-N. Cela désélectionne ou désactive tous les circuits 207-1, 207-2, ... 207-N pour la communication avec le modem 701.

En revanche, lorsque l'un des signaux SEL-1, SEL-2, ... SEL-N est à l'état haut, le circuit 703 est désélectionné ou désactivé pour communiquer avec le modem 701. Le signal RST appliqué par le modem 701 sur la borne 213 de l'interface 209 du circuit 703 est alors recopié par le circuit 703 sur la borne 709-1, 709-2, ... 709-N connectée au circuit 207-1, 207-2, ... 207-N sélectionné. Cela permet ainsi au modem 701 d'appliquer, via le circuit 703, le signal RST sur la borne 213 du circuit 207-1, 207-2, ... 207-N sélectionné. Les autres bornes 709 du circuit 703 transmettent alors chacune un signal RST à l'état bas pour désactiver les autres circuits 207.

À titre de variante, le modem 701 transmet au circuit 703 un nombre N', inférieur ou égal au nombre N, de signaux SEL-1, SEL-2, ... SEL-N'. Les états respectifs des signaux SEL-1, SEL-2, ... SEL-N' permettent par exemple de coder, en binaire, une commande de sélection ou d'activation d'un circuit parmi les circuits 703, 207-1, 207-2, ... 207-N. Le décodage de la commande de sélection ou d'activation du circuit 703, 207-1, 207-2, ... 207-N est par exemple effectué par le circuit 703. Dans cette variante, le modem 701 comporte par exemple N' bornes 705. De façon analogue, le circuit 703 comporte par exemple N' bornes 707, connectées aux bornes 705 du modem 701.

À titre d'exemple, le nombre N' est égal à 2 dans un cas où le dispositif 700 comporte deux ou trois circuits 207 (N = 2 ou 3). Le nombre N' est par exemple égal à 3 dans un autre cas où le dispositif 700 comporte entre quatre et sept circuits 207 (N = 4 à 7). Cela permet avantageusement de réduire le nombre de bornes 705 du modem 701 et le nombre de bornes 707 du circuit 703. La mise en oeuvre de cette variante est à la portée de la personne du métier à partir des indications ci-dessus.

En fonction par exemple de l'application visée, chaque circuit 703, 207-1, 207-2, ... 207-N du dispositif 700 peut, comme exposé précédemment en relation avec la figure 2, recevoir une carte SIM ou stocker un profil SIM. Le circuit 703 est par exemple une carte de circuit intégré universelle embarquée, eUICC. Chaque circuit 207-1, 207-2, ... 207-N est par exemple un emplacement destiné à recevoir une carte SIM. À titre d'exemple, chaque circuit 703, 207-1, 207-2, ... 207-N met en oeuvre un module d'identification d'abonné permettant d'accéder à un réseau différent des réseaux pouvant être utilisés grâce aux modules d'identification d'abonné mis en oeuvre par les autres circuits.

Le mode de réalisation exposé ci-dessus en relation avec la figure 7 présente des avantages similaires à ceux du mode de réalisation exposé en relation avec la figure 6. Le dispositif 700 permet notamment de tirer profit de plusieurs circuits intégrés mettant en oeuvre chacun un module d'identification d'abonné en utilisant un modem ne comportant avantageusement qu'une seule interface de communication normalisée ISO 7816. En outre, dans le dispositif 700, seule l'interface 209 du modem 701 est configurée en tant qu'interface maître, les autres interfaces 209 étant toutes configurées en tant qu'interfaces esclaves. Cela réduit la complexité du dispositif 700 par rapport à un cas où l'on aurait plusieurs interfaces 209 configurées en tant qu'interfaces maîtres.

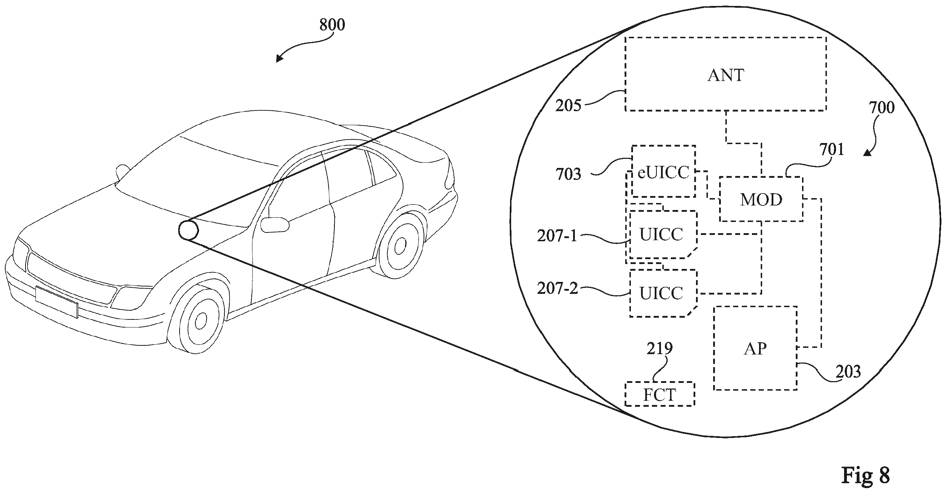

La figure 8 représente un exemple de véhicule automobile 800 comportant le dispositif électronique 700 de communication sans fil.

Dans l'exemple représenté, le dispositif électronique 700 embarqué dans le véhicule automobile 800 comporte, en plus du circuit intégré 703, deux circuits intégrés 207-1 et 207-2 (UICC) connectés au modem 701 (MOD). Cela permet avantageusement au véhicule automobile 800 de communiquer en utilisant plusieurs circuits intégrés mettant en oeuvre chacun un module d'identification d'abonné, tout en limitant la complexité du dispositif 700 permettant d'accéder à ces fonctionnalités de communication étendues.

Divers modes de réalisation et variantes ont été décrits. La personne du métier comprendra que certaines caractéristiques de ces divers modes de réalisation et variantes pourraient être combinées, et d'autres variantes apparaîtront à la personne du métier. En particulier, bien que les modes de réalisation décrits prennent pour exemple le cas d'un véhicule automobile, la personne du métier est capable de transposer ces modes de réalisation à tout type de dispositif électronique, notamment à des téléphones mobiles.

Enfin, la mise en oeuvre pratique des modes de réalisation et variantes décrits est à la portée de la personne du métier à partir des indications fonctionnelles données ci-dessus. En particulier, la personne du métier est capable de choisir, pour chaque circuit intégré 603, 703, 207, 207-1, 207-2, ... 207-N, le type de circuit à utiliser parmi un emplacement destiné à recevoir une UICC physique (carte SIM), une eUICC et une iUICC, les modes de réalisation décrits étant adaptables à une combinaison quelconque de ces types de circuits.

## Revendications

1. Dispositif électronique (600 ; 700) comportant :
- un circuit modulateur-démodulateur (601 ; 701) ;
- un premier circuit intégré (603 ; 703) mettant en oeuvre un premier module d'identification d'abonné ; et
- au moins un deuxième circuit intégré (207 ; 207-1, 207-2, 207-N) destiné à mettre en oeuvre un deuxième module d'identification d'abonné,
dans lequel une borne (215) d'émission-réception de données du premier circuit et une borne (215) d'émission-réception de données du deuxième circuit sont connectées à une même borne (215) d'émission-réception de données du circuit modulateur-démodulateur,
**caractérisé en ce qu'**une première borne (609 ; 709-1, 709-2, 709-N) du premier circuit, connectée à une borne (213) de réinitialisation du deuxième circuit, est adaptée à appliquer, sur ladite borne, un signal de désactivation du deuxième circuit.

2. Dispositif selon la revendication 1, dans lequel une deuxième borne (607 ; 707-1, 707-2, 707-N) du premier circuit (603 ; 703), associée à la première borne (609 ; 709-1, 709-2, 709-N), est connectée à une troisième borne (605 ; 705-1, 705-2, 705-N) du circuit modulateur-démodulateur (601 ; 701).

3. Dispositif selon la revendication 2, dans lequel la troisième borne (605 ; 705-1, 705-2, 705-N) est adaptée à appliquer le signal de désactivation du deuxième circuit (207 ; 207-1, 207-2, 207-N) sur la deuxième borne (607 ; 707-1, 707-2, 707-N).

4. Dispositif selon l'une quelconque des revendications 1 à 3, dans lequel une borne (217) de séquencement du premier circuit (603 ; 703) et une borne (217) de séquencement du deuxième circuit (207 ; 207-1, 207-2, 207-N) sont connectées à une même borne (217) de séquencement du circuit modulateur-démodulateur (601 ; 701).

5. Dispositif selon l'une quelconque des revendications 1 à 4, dans lequel une borne (211) d'alimentation du premier circuit (603 ; 703) et une borne (211) d'alimentation du deuxième circuit (207 ; 207-1, 207-2, 207-N) sont connectées à une même borne (211) d'alimentation du circuit modulateur-démodulateur (601 ; 701).

6. Dispositif selon l'une quelconque des revendications 1 à 5, dans lequel une borne (213) de réinitialisation du premier circuit (603 ; 703) est connectée à une borne (213) de réinitialisation du circuit modulateur-démodulateur (601 ; 701) .

7. Dispositif selon la revendication 6, dans lequel la borne (213) de réinitialisation du circuit modulateur-démodulateur (601 ; 701) est adaptée à appliquer, sur la borne (213) de réinitialisation du premier circuit (603 ; 703), un signal de désactivation du premier circuit.

8. Dispositif selon l'une quelconque des revendications 1 à 7, dans lequel les bornes (215) d'émission-réception de données du circuit modulateur-démodulateur (601 ; 701) et des premier et deuxième circuits (603, 207 ; 703, 207-1, 207-2, 207-N) font chacune partie d'une interface de communication (209) normalisée ISO 7816.

9. Dispositif selon l'une quelconque des revendications 1 à 8, dans lequel le premier circuit (603 ; 703) est une carte de circuit intégré universelle embarquée.

10. Dispositif selon l'une quelconque des revendications 1 à 9, dans lequel chaque deuxième circuit (207 ; 207-1, 207-2, 207-N) est choisi parmi :
- un emplacement destiné à recevoir une carte de circuit intégré universelle ;
- une carte de circuit intégré universelle embarquée, eUICC ; et
- une carte de circuit intégré universelle intégrée, iUICC.

11. Véhicule automobile (800) comportant un dispositif (600 ; 700) selon l'une quelconque des revendications 1 à 10.

12. Procédé de commande d'un dispositif (600 ; 700) selon l'une quelconque des revendications 1 à 10, comprenant l'étape de traiter un signal de données par le premier circuit (603 ; 703) ou par le deuxième circuit (207 ; 207-1, 207-2, 207-N) en fonction d'un état du signal de désactivation du deuxième circuit.

13. Procédé selon la revendication 12, dans lequel le premier circuit (603 ; 703) est désactivé lorsque le deuxième circuit (207 ; 207-1, 207-2, 207-N) est activé.

## Patentansprüche

1. Eine elektronische Vorrichtung (600; 700), die Folgendes aufweist:
- eine Modulator-Demodulator Schaltung (601; 701);
- eine erste integrierte Schaltung (603; 703), die ein erstes Abonnentenidentifikationsmodul implementiert; und
- wenigstens eine zweite integrierte Schaltung (207; 207-1; 207-2; 207-N) vorgesehen zum Implementieren eines zweiten Abonnentenidentifikationsmoduls,
wobei ein Daten-Übertragungs-Empfangs-Anschluss (215) der ersten Schaltung und ein Daten-Übertragungs-Empfangs-Anschluss (215) der zweiten Schaltung mit einem gleichen Daten-Übertragungs-Empfangs-Anschluss (215) der Modulator-Demodulator Schaltung verbunden sind,
**gekennzeichnet dadurch, dass** ein erster Anschluss (609; 709-1; 709-2; 709-N) der ersten Schaltung, verbunden mit einem Rückstell- bzw. Reset-Anschluss (213) der zweiten Schaltung, angepasst ist zum Anlegen, an den Anschluss, eines Signals zum Abschalten der zweiten Schaltung.

2. Vorrichtung nach Anspruch 1, wobei ein zweiter Anschluss (607; 707-1; 707-2; 707-N) der ersten Schaltung (603; 703), verknüpft mit dem ersten Anschluss (609; 709-1; 709-2; 709-N), verbunden ist mit einem dritten Anschluss (605; 705-1; 705-2; 705-N) der Modulator-Demodulator Schaltung (601; 701).

3. Vorrichtung nach Anspruch 2, wobei der dritte Anschluss (605; 705-1; 705-2; 705-N) angepasst ist zum Anlegen des Signals zum Abschalten der zweiten Schaltung (207; 207-1; 207-2; 207-N) an den zweiten Anschluss (607; 707-1; 707-2; 707-N).

4. Vorrichtung nach einem der Ansprüche 1 bis 3, wobei ein Sequenzierungsanschluss (217) der ersten Schaltung (603; 703) und ein Sequenzierungsanschluss (217) der zweiten Schaltung (207; 207-1; 207-2; 207-N) mit einem gleichen Sequenzierungsanschluss (217) der Modulator-Demodulator Schaltung (601; 701) verbunden sind.

5. Vorrichtung nach einem der Ansprüche 1 bis 4, wobei ein Leistungsversorgungsanschluss (211) der ersten Schaltung (603; 703) und ein Leistungsversorgungsanschluss (211) der zweiten Schaltung (207; 207-1; 207-2; 207-N) mit einem gleichen Leistungsversorgungsanschluss (211) der Modulator-Demodulator Schaltung (601; 701) verbunden sind.

6. Vorrichtung nach einem der Ansprüche 1 bis 5, wobei ein Reset-Anschluss (213) der ersten Schaltung (603; 703) mit einem Reset-Anschluss (213) der Modulator-Demodulator Schaltung (601; 701) verbunden ist.

7. Vorrichtung nach Anspruch 6, wobei der Reset-Anschluss (213) der Modulator-Demodulator Schaltung (601; 701) angepasst ist zum Anlegen, an den Reset-Anschluss (213) der ersten Schaltung (603; 703), eines Signals um Abschalten der ersten Schaltung.

8. Vorrichtung nach einem der Ansprüche 1 bis 7, wobei die Daten-Übertragungs-Empfangs-Anschlüsse (215) der Modulator-Demodulator Schaltung (601; 701) und der ersten und zweiten Schaltungen (603, 207; 703, 207-1, 207-2, 207-N) jeder Teil eines standardisierten ISO 7816 Kommunikationsinterfaces (209) sind.

9. Vorrichtung einem der Ansprüche 1 bis 8, wobei die erste Schaltung (603; 703) eine eingebaute-universale-integrierte-Schaltungs-Karte bzw. embedded universal integrated circuit card ist.

10. Vorrichtung nach einem der Ansprüche 1 bis 9, wobei jede zweite Schaltung (207; 207-1; 207-2; 207-N) ausgewählt ist aus der Folgenden Gruppe:
- ein Fach vorgesehen um eine universal integrated circuit card augzunehmenw;
- eine embedded universal integrated circuit card, eUICC; und
- eine integrated universal integrated circuit card, iUICC.

11. Ein Motor-Fahrzeug (800), das eine Vorrichtung (600; 700) nach einem der Ansprüche 1 bis 10 aufweist.

12. Ein Verfahren zum Steuern einer Vorrichtung (600; 700) nach einem der Ansprüche 1 bis 10, das den Schritt aufweist zum Verarbeiten eines Datensignals durch die erste Schaltung (603; 703) oder durch die zweite Schaltung (207; 207-1, 207-2, 207-N) entsprechend zu einem Zustand des Signals zum Abschalten der zweiten Schaltung.

13. Verfahren nach Anspruch 12, wobei die erste Schaltung (603; 703) abgeschaltet wird, wenn die zweite Schaltung (207; 207-1, 207-2, 207-N) angeschaltet wird.

## Claims

1. Electronic device (600; 700) comprising:
- a modulator-demodulator circuit (601; 701);
- a first integrated circuit (603; 703) implementing a first subscriber identification module; and
- at least one second integrated circuit (207; 207-1, 207-2, 207-N) intended to implement a second subscriber identification module,
wherein a data transmit-receive terminal (215) of the first circuit and a data transmit-receive terminal (215) of the second circuit are connected to a same data transmit-receive terminal (215) of the modulator-demodulator circuit,
**characterized in that** a first terminal (609; 709-1, 709-2, 709-N) of the first circuit, connected to a reset terminal (213) of the second circuit, is adapted to applying, to said terminal, a signal for deactivating the second circuit.

2. Device according to claim 1, wherein a second terminal (607; 707-1, 707-2, 707-N) of the first circuit (603; 703), associated with the first terminal (609; 709-1, 709-2, 709-N), is connected to a third terminal (605; 705-1, 705-2, 705-N) of the modulator-demodulator circuit (601; 701).

3. Device according to claim 2, wherein the third terminal (605; 705-1, 705-2, 705-N) is adapted to applying the signal for deactivating the second circuit (207; 207-1, 207-2, 207-N) to the second terminal (607; 707-1, 707-2, 707-N) .

4. Device according to any of claims 1 to 3, wherein a sequencing terminal (217) of the first circuit (603; 703) and a sequencing terminal (217) of the second circuit (207; 207-1, 207-2, 207-N) are connected to a same sequencing terminal (217) of the modulator-demodulator circuit (601; 701).

5. Device according to any of claims 1 to 4, wherein a power supply terminal (211) of the first circuit (603; 703) and a power supply terminal (211) of the second circuit (207; 207-1, 207-2, 207-N) are connected to a same power supply terminal (211) of the modulator-demodulator circuit (601; 701).

6. Device according to any of claims 1 to 5, wherein a reset terminal (213) of the first circuit (603; 703) is connected to a reset terminal (213) of the modulator-demodulator circuit (601; 701).

7. Device according to claim 6, wherein the reset terminal (213) of the modulator-demodulator circuit (601; 701) is adapted to applying, to the reset terminal (213) of the first circuit (603; 703), a signal for deactivating the first circuit.

8. Device according to any of claims 1 to 7, wherein the data transmit-receive terminals (215) of the modulator-demodulator circuit (601; 701) and of the first and second circuits (603, 207; 703, 207-1, 207-2, 207-N) each form part of a standardized ISO 7816 communication interface (209).

9. Device according to any of claims 1 to 8, wherein the first circuit (603; 703) is an embedded universal integrated circuit card.

10. Device according to any of claims 1 to 9, wherein each second circuit (207; 207-1, 207-2, 207-N) is selected from among:
- a slot intended to receive a universal integrated circuit card;
- an embedded universal integrated circuit card, eUICC; and
- an integrated universal integrated circuit card, iUICC.

11. A motor vehicle (800) comprising a device (600; 700) according to any of claims 1 to 10.

12. Method of controlling a device (600; 700) according to any of claims 1 to 10, comprising the step of processing a data signal by the first circuit (603; 703) or by the second circuit (207; 207-1, 207-2, 207-N) according to a state of the signal for deactivating the second circuit.

13. Method according to claim 12, wherein the first circuit (603; 703) is deactivated when the second circuit (207; 207-1, 207-2, 207-N) is activated.
